# EUROPEAN PATENT APPLICATION

(11) **EP 1 157 774 A2**
(43) Date of publication of application: **28.11.2001**
(21) Application number: 01304514.1
(22) Date of filing: 23.05.2001
(51) Int. Cl.: B23K 11/24

(54) **Resistance welding power supply apparatus**

(30) Priority: 26.05.2000 JP 2000156592
(71) Applicant: Miyachi Technos Corporation, Noda-shi, Chiba-ken (JP)
(72) Inventor: Watanabe, Mikio, Noda-shi, Chiba-ken (JP)
(74) Representative: Makovski, Priscilla Mary

(57) **Abstract**

A capacitor (12) has a positive electrode (12a) that is electrically connected to a welding electrode (14) on one hand by way of a switching transistor (18) for the supply of welding current and has a negative electrode (12b) that is electrically connected to a welding electrode (16) on the other. The capacitor (12) is charged by a charging circuit (30). A charging control unit (50) accepts as a charging voltage monitor signal an output signal of a comparator (54) and provides a control of the charging circuit (30) so as to allow a capacitor voltage V_{g} fed to one input terminal of the comparator (54) to conform to a set voltage Vₛ fed by a main control unit (28). This power supply apparatus includes two designation modes, i.e., a direct designation mode in which the user directly designates a desired capacitor voltage, and an indirect designation mode in which the user designates a standard current value as a provisional standard for a welding current I_{w} so that the apparatus can automatically set a capacitor voltage corresponding to the standard current value designated.

## Description

### BACKGROUND OF THE INVENTION

### 1. Field of the Invention

The present invention relates generally to a power supply apparatus for resistance welding, and more particularly, to a power supply apparatus having a capacitor for temporarily storing electric power as welding energy previous to feeding via a switching element to workpieces to be welded together.

### 2. Description of the Related Arts

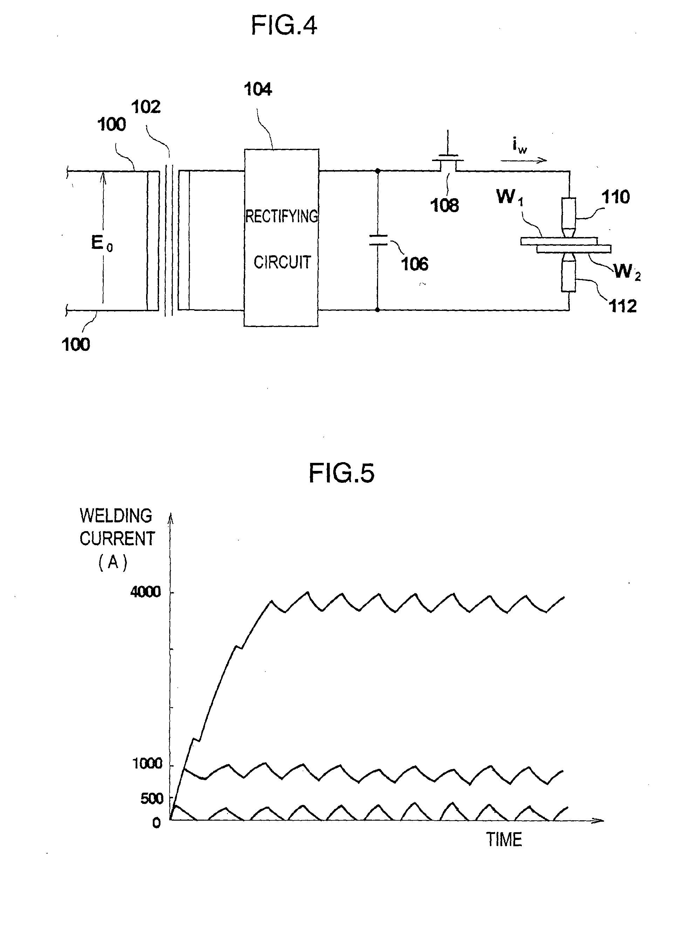

Fig. 4 depicts a circuit configuration of such a conventional resistance welding power supply apparatus. In this power supply apparatus, a single-phase AC power supply voltage E₀ of a commercial frequency is input from an AC power supply line 100 via a transformer 102 to a rectifying circuit 104 so that a capacitor 106 is charged with a DC voltage output from the rectifying circuit 104. A transistor 108 acting as a switching element is closed to allow a charged energy in the capacitor 106 to be discharged to a circuit associated with welding electrodes 110 and 112 so that workpieces (W₁ and W₂) are supplied with a welding current i_{w}.

In case of providing a feedback constant-current control, this power supply apparatus comprises current measurement means not shown which measure the welding current i_{w} and control means not shown which provide, e.g., a PWM (pulse-width modulation) control of the switching transistor 108 so as to allow a welding current measured value to coincide with a welding current set value.

In the above conventional transistor-based resistance welding power supply apparatus, the capacitor 106 has had a fixed charging voltage. The charging voltage of the capacitor 106 has normally been set to near a possible maximum charging voltage of that apparatus so as to ensure as rapid a rise of the welding current i_{w} as possible and ensure as large a current value as possible.

When a small welding current i_{w} flows, however, the rate of the current ripple tended to increase, making it difficult to obtain a set current value and an expected weld quality. That is, as depicted in Fig. 5 by way of example, although substantially a constant rapid rise is obtained irrespective of the magnitude of the welding current i_{w}, there appears substantially an unvarying large current ripple. For this reason, a small current not more than 500 amperes may often cause an intermittent supply of current substantially including only the current ripple, which renders it difficult to obtain a set current value as desired. It is to be noted in Fig. 5 that the current ripple period corresponds to the switching (ON-OFF) period of the switching transistor 108.

### SUMMARY OF THE INVENTION

The present invention was conceived in view of the above problems involved in the prior art. It is therefore an object of the present invention to provide a resistance welding power supply apparatus capable of arbitrarily variably adjusting welding current rise characteristics or current ripple characteristics.

Another object of the present invention is to provide a resistance welding power supply apparatus capable of suppressing the influence of the current ripple irrespective of the magnitude of the welding current, to thereby ensure an acquisition of a set welding current.

A further object of the present invention is to provide a resistance welding power supply apparatus capable of automatic adjustment of the current rise characteristics or current ripple characteristics in conjunction with the setting of a current value of the welding current.

According to an aspect of the present invention, to attain the above objects, there is provided a resistance welding power supply apparatus for resistance welding workpieces, the apparatus having a pair of welding electrodes across which a welding current flows, the pair of welding electrodes adapted to come into pressure contact with the workpieces, the resistance welding power supply apparatus comprising a capacitor having first and second electrodes electrically connected to each electrode of the pair of welding electrodes, respectively, the capacitor storing resistance welding electric energy in the form of electric charges between the first and second electrodes; current switching means electrically connected between the capacitor and one electrode of the pair of welding electrodes; current control means arranged to provide a switching control of the current switching means to control a welding current during the supply of resistance welding current; and capacitor voltage control means arranged to control a voltage across the pair of electrodes of the capacitor to have a desired voltage value capable of being variably set.

In the above configuration, during the supply of resistance welding current, the capacitor discharges within a current-supplying circuit including the capacitor, the welding electrodes and workpieces to be welded together, allowing a flow of a welding current. At that time, the welding current undergoes a current ripple resulting from switching operations of the current switching means. The current ripple is proportional to the capacitor voltage. The welding current rise speed is also proportional to the capacitor voltage. In the present invention, the capacitor voltage control means control the voltage across the two electrodes of the capacitor to have a desired voltage value capable of being variably set whereby it is possible to arbitrarily variably adjust the welding current rise characteristics or current ripple characteristics. Thus, when a small welding current is to flow, the capacitor voltage is lowered so that a desired current value can be obtained with a small current ripple.

Preferably, the resistance welding power supply apparatus of the present invention further comprises current setting means arranged to set a desired welding current and current measurement means arranged to measure a welding current fed to the workpieces; the current control means providing a switching control of the current switching means so as to allow a current measured value acquired from the current measurement means to conform to a welding current set value fed by the current setting means. In such a configuration, the current control means may provide a pulse-width modulation switching control of the current switching means, or alternatively, the current control means may hold the current switching means in ON-state in a continuous manner during the supply of resistance welding current.

As a preferred mode, the capacitor voltage control means may include capacitor voltage setting means which set a desired capacitor voltage; voltage measurement means which measure a voltage across the first and second electrodes of the capacitor; a rectifying circuit which rectifies an AC power supply voltage of a commercial frequency to output a DC voltage; charging switching means electrically connected between an output terminal of the rectifying circuit and the capacitor; and charging control means which, for charging the capacitor, provide a switching control of the charging switching means so as to allow a voltage measured value acquired from the voltage measurement means to conform to a capacitor voltage set value fed from the capacitor voltage setting means.

As another preferred mode, the capacitor voltage control means may include current standard value selection means which select one of a plurality of preset standard values of a welding current; capacitor voltage setting means which set a capacitor voltage corresponding to a welding current standard value selected by the current standard value selection means; voltage measurement means which measure a voltage across the first and second electrodes of the capacitor; a rectifying circuit which rectifies an AC power supply voltage of a commercial frequency to output a DC voltage; charging switching means electrically connected between an output terminal of the rectifying circuit and the capacitor; and charging control means which provide a switching control of the charging switching means so as to allow a voltage measured value acquired from the voltage measurement means to conform to a capacitor voltage set value fed from the capacitor voltage setting means.

The capacitor voltage control means may further include a discharge circuit having a discharge resistor and switching means connected in series and in parallel with the first and second electrodes of the capacitor.

### BRIEF DESCRIPTION OF THE DRAWINGS

The above and other objects, aspects, features and advantages of the present invention will become more apparent from the following detailed description when taken in conjunction with the accompanying drawings, in which:
Fig. 1 illustrates a configuration of a transistor-based resistance welding power supply apparatus in accordance with an embodiment of the present invention;
Fig. 2 shows a table that correlates standard current values and capacitor voltage set values in an indirect designation mode of the embodiment;
Fig. 3 shows waveforms of welding currents acquired in the power supply apparatus of the embodiment;
Fig. 4 illustrates a configuration of a conventional transistor-based resistance welding power supply apparatus; and
Fig. 5 shows waveforms of welding currents acquired in the conventional apparatus.

### DESCRIPTION OF THE PREFERRED EMBODIMENT

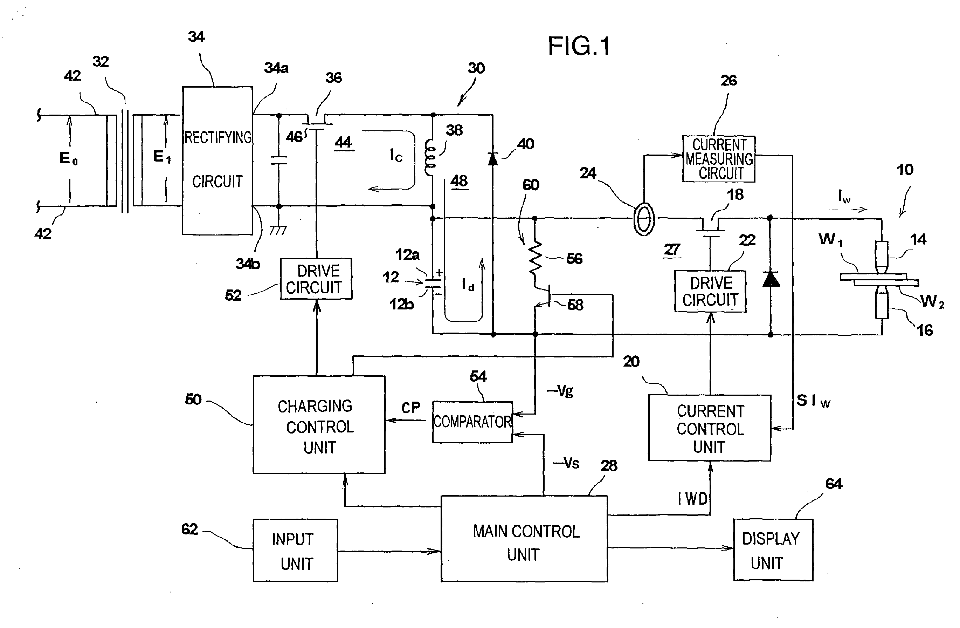

The present invention will now be described with reference to Figs. 1 to 3 which illustrate a presently preferred embodiment thereof in a non-limitative manner.

Fig. 1 depicts a circuit configuration of a transistor resistance welding power supply apparatus in accordance with the embodiment of the present invention. The power supply apparatus comprises a capacitor 12 for supplying a resistance welding energy (electric power) to a welding unit 10.

The welding unit 10 includes a pair of welding electrodes 14 and 16. The welding electrodes 14 and 16 are physically connected to a pressure unit not shown so that upon the resistance welding the welding electrodes 14 and 16 can come into pressure contact with workpieces W₁ and W₂ from opposed sides thereof by the action of a weld force from the pressure unit.

The capacitor 12 is comprised of a single or a plurality of low-voltage large-capacity capacitors which are connected in parallel. The capacitor 12 has a positive electrode 12a that is electrically connected via switching means 18 for supplying welding current to the welding electrode 14 on one hand and a negative electrode 12b that is electrically connected to the welding electrode 16 on the other.

The switching means 18 consist of a single or a plurality of switching transistors, e.g., FETs (field effect transistors) which are connected in parallel. The switching means 18 are arranged such that during the supply of welding current the switching means 18 are switching controlled via a drive circuit 22 by a current control unit 20.

When the switching transistor 18 turns on from OFF-state in its switching operation, the capacitor 12 discharges in a current-supplying circuit 27 that includes the capacitor 12, the switching transistor 18, the welding electrodes 14, 16 and workpieces W1, W2, causing a momentary increase of a welding current I_{w}. The rate of increase of the current is inversely proportional to the impedance of the current-supplying circuit 27 and is proportional to the voltage at the capacitor 12. As a result, between the welding current I_{w} and the voltage at the capacitor 12 there is a relationship that the current I_{w} has an increased rise speed and ripple accordingly as the capacitor voltage becomes higher but that the current I_{w} has a reduced rise speed and ripple accordingly as the capacitor voltage becomes lower.

The current control unit 20 is so arranged as to allow the welding current I_{w} to be controlled to a desired set value or waveform under the PWM constant current control for example. For feedback of the welding current I_{w} in this constant current control, a current sensor 24 in the form of, e.g., a toroidal coil is fitted to the current-supplying circuit 27 at an appropriate point (conductor) thereof so that based on an output signal (current detection signal) from the current sensor 24 a current measuring circuit 26 figures out a measured value, e.g., an effective value of the welding current I_{w} and applies a thus obtained current measured value SI_{w} to the current control unit 20. The current control unit 20 accepts a set value or data IWD on a set waveform of the welding current I_{w} from a main control unit 28.

In this power supply apparatus, a charging circuit 30 for charging the capacitor 12 includes a transformer 32, a rectifying circuit 34, a switching transistor (switching means) 36, an inductance coil 38 and a freewheeling diode 40.

The transformer 32 has a primary coil that is connected to AC power lines 42 for distributing a single-phase AC power supply voltage E₀ of a commercial frequency and has a secondary coil that is connected to a pair of input terminals of the rectifying circuit 34. The rectifying circuit 34 is comprised of a single-phase full-wave rectifying circuit consisting of, e.g., four diodes not shown which are bridge-connected to each other. The rectifying circuit 34 serves to full-wave rectify an AC power supply voltage E₁ acquired at the secondary side of the transformer 32, to output a DC voltage.

Of a pair of output terminals of the rectifying circuit 34, a positive output terminal 34a is connected via the switching transistor (e.g., FET) 36 to one end of the inductance coil 38, whilst a negative output terminal 34b is connected to the ground potential (grounded) and to the other end of the inductance coil 38 and to the positive electrode 12a of the capacitor 12. When the switching transistor 36 turns on or allows conduction, a direct current I_{c} flows through a circuit 44 that includes the positive output terminal 34a of the rectifying circuit 34, the switching transistor 36, the inductance coil 38 and the negative output terminal 34b of the rectifying circuit 34. It is to be noted that a smoothing capacitor 46 is connected between the output terminals 34a and 34b of the rectifying circuit 34.

The diode 40 has an anode terminal that is connected to the negative electrode 12b of the capacitor 12 and a cathode terminal that is connected to one end of the inductance coil 38. When the switching transistor 36 is turned off from its ON-state, a current I_{d} from the inductance coil 38 flows in the forward direction of the diode 40 within a closed circuit 48 including the inductance coil 38, the capacitor 12 and the diode 40 such that the capacitor 12 is charged with the freewheeling current I_{d}.

While the switching transistor 36 is on, an electromagnetic energy is stored in the inductance coil 38 by the action of the current I_{c} flowing through the output circuit 44 of the rectifying circuit 34, whereas once the switching element 36 is turned off from ON-state, the electromagnetic energy in the inductance coil 38 is transformed into an electrostatic energy (electric charge) of the capacitor 12 through the current I_{d} flowing within the freewheeling circuit 48. The switching transistor 36 is arranged to be controlled via a drive circuit 52 by a charging control unit 50 during the supply of charging current.

The charging control unit 50 executes a charging control in response to a control signal from the main control unit 28 or to an output signal CP of a comparator 54, to provide e.g., PWM constant-current control directly of the current I_{c} within the rectifier output circuit 44 and indirectly of the current I_{d} within the freewheeling circuit 48. For feedback of the charging current I_{d} or I_{c} to the charging control unit 50 in this constant-current control, a current sensor not shown may be fitted to the freewheeling circuit 48 or to the rectifier output circuit 44, with a current measuring circuit not shown provided to determine a measured value of the charging current I_{d} or I_{c} on the basis of the output signal of this current sensor.

One input terminal of the comparator 54 accepts a voltage, i.e., a negative charging voltage - V_{g} at the negative electrode 12b of the capacitor 12 whereas the other input terminal of the comparator 54 accepts a negative set voltage - Vₛ which is capable of being variably set from the main control unit 28. For example, the comparator 54 allows the output signal CP to go high when the charging voltage V_{g} (absolute value) of the capacitor 12 is higher than the set voltage Vₛ (absolute value) whereas it allows the out signal CP to go low when opposite (V_{g} < Vₛ).

The charging control unit 50 receives the output signal CP of the comparator 54 as a charging voltage monitor signal and, when the signal CP is low (V_{g} < Vₛ), allows the charging unit 30 to be conductive, i.e., provides a PWM switching control of the switching transistor 36 to charge the capacitor 12.

Across the two electrodes 12a and 12b of the capacitor 12 there is connected a discharge circuit 60 in the form of a series circuit including a resistor 56 and a transistor 58. The instant a power supply switch not shown is operated to be off, the charging control unit 50 turns the transistor 58 on in response to a control signal from the main control unit 28 to cause the discharge circuit 60 to conduct to thereby relieve (discharge) the capacitor 12 of electric charges stored therein. In cases where the capacitor voltage set value has been altered to a lower value by a capacitor voltage variable setting function of this embodiment which will be described later, the charging control unit 50 may have the discharge circuit 60 conductive while simultaneously monitoring the output signal CP of the comparator 54 (till the inversion of the signal CP from high to low), to thereby lower the capacitor charging voltage V_{g} to the altered set voltage Vₛ.

The main control unit 28 includes microcomputer and various interface circuits acting as its peripheral circuits. The main control unit 28 feeds predetermined control signals or set values to the current control unit 20, the charging control unit 50 and the comparator 54 as described above and is further associated with an input unit 62, a display unit 64, etc.

The input unit 62 and the display unit 64 may be comprised of a keyboard or input keys and a display, respectively, which are fitted to a console panel not shown. The user can operate the keys of the input unit 62 while viewing a setting screen appearing on the display unit 64, to thereby set desired values for various set items or conditions. The thus set data are stored in a memory included in the main control unit 28.

The welding current I_{w} and the voltage of the capacitor 12 are especially indispensable among the items or conditions capable of being set. This embodiment enables the user to set any desired voltage value within a predetermined range (e.g., 5 to 30 volts) for the voltage of the capacitor 12, in addition to the welding current I_{w}.

More specifically, this power supply apparatus has as its setting input modes for variably setting the voltage of the capacitor 12 a direct designation mode (first mode) in which the user directly designates a desired capacitor voltage and an indirect designation mode (second mode) in which the apparatus (main control unit 28) automatically sets a capacitor voltage corresponding to a standard current value designated by the user as a provisional standard of the welding current I_{w}. The user can select these setting input modes at any time through the setting screen.

When the direct designation mode is in selection, the main control unit 28 registers intactly as a set value a desired capacitor voltage value entered through the input unit 62 and applies to the comparator 54 a set voltage Vₛ corresponding to the set value.

When the indirect designation mode is in selection, the main control unit 28 sets a standard current value entered or selected through the input unit 62. The main control unit 28 then retrieves from a predetermined table a capacitor voltage set value previously allocated to the thus selected standard current value and applies to the comparator 54 a set voltage Vₛ corresponding to the retrieved capacitor voltage set value.

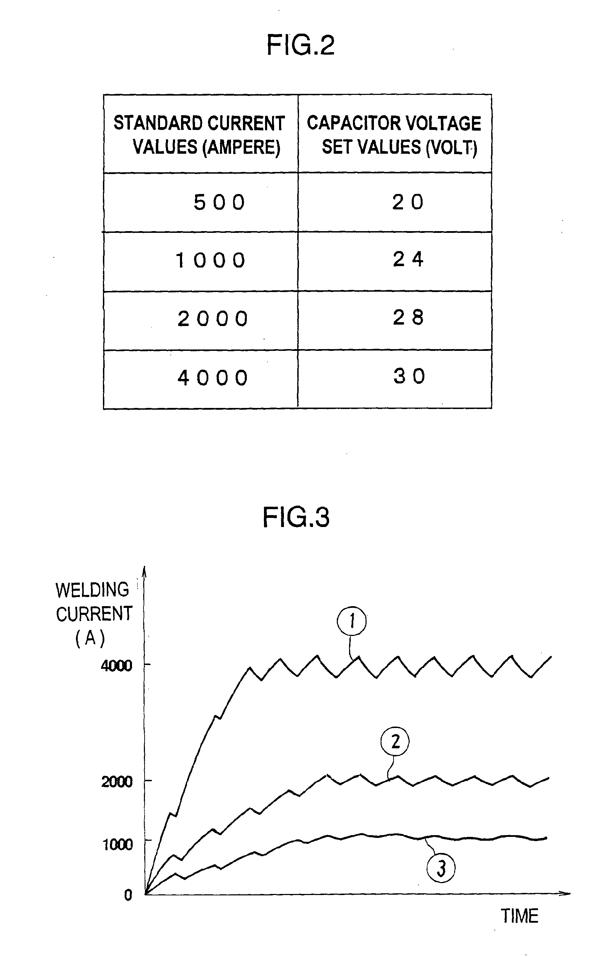

Referring to Fig. 2 there is depicted by way of example a table that correlates the standard current values and the capacitor voltage set values in the indirect designation mode. The table is created on a memory included in the main control unit 28 and may be modified or updated if desired. The shown example provides four different standard current values, 500 amperes, 1,000 amperes, 2,000 amperes and 4,000 amperes which are correlated with voltage set values of the capacitor 12, 20 volts, 24 volts, 28 volts and 30 volts, respectively. In this manner, correlation is made such that a smaller standard current value leads to a lower capacitor voltage set value whereas a larger standard current value leads to a higher capacitor voltage set value.

In the indirect designation mode, the user may designate a standard current value close to a set value of the welding current I_{w}. For example, the standard current value 2,000 amperes may be designated when setting the welding current I_{w} to 1,700 amperes. In such an event, the main control unit 28 sets the voltage of the capacitor 12 to 28 volts from the tablet, allowing the charging control unit 50 and the charging circuit 30 to charge the capacitor 12 to approx. 28 volts.

In this manner, the user designates a standard current value as a standard for setting the welding current whereby the voltage of the capacitor 12 is controlled to a value previously allocated to the designated standard current value within the power supply apparatus.

Fig. 3 depicts waveforms of the welding current I_{w} of this embodiment acquired in the case ① where the welding current I_{w} has been set to 4,000 amperes with the capacitor 12 at 30 volts, the case ② where the welding current I_{w} has been set to 2,000 amperes with the capacitor 12 at 28 volts, and the case ③ where the welding current I_{w} has been set to 1,000 amperes with the capacitor 12 at 24 volts. In the diagram, the current ripple period corresponds to the switching (ON-OFF) period of the PWM controlled switching transistor 18.

As shown, when the welding current I_{w} is set to a large value, a rapid current rise can be achieved by setting the voltage of the capacitor 12 to a higher value. In this case, the current ripple may increase, but a less rate or influence of the ripple is ensured due to largeness of the welding current I_{w} itself. On the contrary, when the welding current I_{w} is set to a small value, a lower set voltage value of the capacitor 12 may bring about a slow current rise but instead ensures a sufficiently small current ripple.

Thus, by variably setting or controlling the voltage of the capacitor 12, it is possible to regulate the rise characteristics and ripple characteristics of the welding current I_{w} and, as shown in Fig. 3, to speed up the current rise when a large welding current I_{w} flows but to reduce the current ripple when a small welding current I_{w} flows.

The direct designation mode of this embodiment complements the indirect designation mode in order to achieve a finer and freer setting of the relationship between the welding current and the capacitor voltage. For instance, when the welding current I_{w} is set to 1,700 amperes in the above example, the direct designation mode enables the voltage of the capacitor 12 to be set to, e.g., 26 volts so as to enhance the ripple reduction or suppression effect. In the case of flow of a small welding current I_{w} as well, the voltage of the capacitor 12 may be set to a slightly high level by the direct designation mode so as to obtain a desired current rise speed.

Various modifications are feasible in configuration of the parts of the above embodiment, esp., in configuration of the charging circuit 30. Although in the above embodiment the switching transistor 18 has experienced a switching operation at a high frequency (e.g., 1 kHz) by PWM, a switching control may be provided such that the switching transistor 18 is continuously on as a sort of variable resistor during the current-supplying time.

According to the resistance welding power supply apparatus of the present invention, as set forth hereinabove, the welding current rise characteristics or current ripple characteristics can variably be regulated at will so as to, e.g., increase the current rise speed when a large welding current flows but to reduce the current ripple when a small welding current flows. The current rise characteristics or the current ripple characteristics are automatically regulated in conjunction with the setting of the current value of the welding current. This contributes to an improved quality management of the resistance welding.

While illustrative and presently preferred embodiment of the present invention have been described in detail herein, it is to be understood that the inventive concepts may be otherwise variously embodied and employed and that the appended claims are intended to be construed to include such variations except insofar as limited by the prior art.

## Claims

1. A resistance welding power supply apparatus for resistance welding workpieces, the apparatus having a pair of welding electrodes across which a welding current flows, the pair of welding electrodes adapted to come into pressure contact with said workpieces, the resistance welding power supply apparatus comprising:
a capacitor having first and second electrodes electrically connected to each electrode of said pair of welding electrodes, respectively, said capacitor storing resistance welding electric energy in the form of electric charges between said first and second electrodes;
current switching means electrically connected between said capacitor and one electrode of said pair of welding electrodes;
current control means arranged to provide a switching control of said current switching means to control a welding current during the supply of resistance welding current; and
capacitor voltage control means arranged to control a voltage across said pair of electrodes of said capacitor to have a desired voltage value capable of being variably set.

2. The resistance welding power supply apparatus according to claim 1, further comprising:
current setting means arranged to set a desired welding current; and
current measurement means arranged to measure a welding current fed to said workpieces;
wherein said current control means providing a switching control of said current switching means so as to allow a current measured value acquired from said current measurement means to conform to a welding current set value fed by said current setting means.

3. The resistance welding power supply apparatus according to claim 1 or 2, wherein
said current control means provide a pulse-width modulation switching control of said current switching means.

4. The resistance welding power supply apparatus according to claim 1 or 2, wherein
said current control means hold said current switching means in ON-state in a continuous manner during the supply of resistance welding current.

5. The resistance welding power supply apparatus according to any one of the preceding claims, wherein
said capacitor voltage control means include:
capacitor voltage setting means which set a desired capacitor voltage;
voltage measurement means which measure a voltage across said first and second electrodes of said capacitor;
a rectifying circuit which rectifies an AC power supply voltage of a commercial frequency to output a DC voltage;
charging switching means electrically connected between an output terminal of said rectifying circuit and said capacitor; and
charging control means which, for charging said capacitor, provide a switching control of said charging switching means so as to allow a voltage measured value acquired from said voltage measurement means to conform to a capacitor voltage set value fed from said capacitor voltage setting means.

6. The resistance welding power supply apparatus according to any one of claims 1 to 4, wherein
said capacitor voltage control means include:
current standard value selection means which selects one of a plurality of preset standard values of a welding current;
capacitor voltage setting means which set a capacitor voltage corresponding to a welding current standard value selected by said current standard value selection means;
voltage measurement means which measure a voltage across said first and second electrodes of said capacitor;
a rectifying circuit which rectifies an AC power supply voltage of a commercial frequency to output a DC voltage;
charging switching means electrically connected between an output terminal of said rectifying circuit and said capacitor; and
charging control means which provide a switching control of said charging switching means so as to allow a voltage measured value acquired from said voltage measurement means to conform to a capacitor voltage set value fed from said capacitor voltage setting means.

7. The resistance welding power supply apparatus according to claim 5 or 6, wherein
said capacitor voltage control means further include:
a discharge circuit having a discharge resistor and switching means connected in series and in parallel with said first and second electrodes of said capacitor.
